# EUROPEAN PATENT SPECIFICATION

(11) **EP 0 810 069 B1**
(45) Date of publication and mention of the grant of the patent: **04.04.2001**
(21) Application number: 97300165.4
(22) Date of filing: 13.01.1997
(51) Int. Cl.: B25B 27/24

(54) **Kits for replacement of thermostatic valve assemblies**
Bausatz zum Ersetzen von thermostatischen Ventilvorrichtungen
Ensemble pour le remplacement de soupapes thermostatiques

(30) Priority: 28.05.1996 GB 9611105
(43) Date of publication of application: 03.12.1997
(73) Proprietor: QUINTON HAZELL plc, Nuneaton Warwickshire CV10 7QQ (GB)
(72) Inventor: Earl, Jeffrey Robert, Coventry CV6 4NJ (GB); Bleasdale, Lawrence Gerard, Malvern, Worcester WR13 5NW (GB)
(74) Representative: Style, Kelda Camilla Karen

(56) References cited:
- EP-A- 0 432 103
- DD-A- 240 350
- DE-A- 2 239 201
- DE-C- 4 416 240
- DE-U- 9 105 021
- US-A- 4 193 542

## Description

The present invention relates to kits for replacing thermostatic valve assemblies for internal combustion engines in, for example, motor vehicles.

Thermostatic valve assemblies see Document EP-A-0 432 103 are used in the cooling systems of engines in motor vehicles to cause cooling liquid to circulate round the engine when the temperature exceeds a given value. When the temperature falls below the given value, the thermostatic valve assembly stops or reduces the flow of cooling liquid round the engine. These thermostatic valve assemblies are generally received in housings which define a seat for a valve closure member of the thermostatic valve assembly. When the valve member is received on the seat, the circulation of most of the cooling liquid is prevented. Additionally slots are provided in the housing into which respective engagement arms of the thermostatic valve assembly are received. The interaction between the slots and the engagement arms ensures that the thermostatic valve assembly is retained in position in the housing.

From time to time, faults occur in the thermostatic valve. These faults are usually in the thermostat part of the assembly but may also arise in relation to the valve portion of the assembly. The thermostatic valve assembly therefore has to be replaced. Currently, in order to replace the thermostatic valve assembly, it is necessary to purchase a replacement housing in combination with a replacement thermostatic valve assembly. As the replacement thermostatic valve assembly is already in the correct position in the replacement housing, the defective thermostatic valve assembly and its housing are both removed and simply replaced by the new parts. However, the cost of the housing is significantly greater than the cost of the thermostatic valve assembly which increases the costs involved in replacing the thermostatic valve assembly. Generally the housing itself does not require replacement.

Conventionally, a defective thermostatic valve assembly has not been replaced by removing the defective thermostatic valve assembly from the existing housing and fitting a new thermostatic valve assembly into the same housing due to the difficulties particularly in inserting a replacement thermostatic valve assembly. This is because the current thermostatic valve assemblies are provided with two springs, the first between the engagement arms and the valve closure member and the second between the engagement arms and a bypass closure member. When the thermostatic valve assembly is in position in the housing, the first spring is in a state of compression. When the existing thermostatic valve assembly is removed, the first spring expands and gets entangled with the second spring. It is therefore difficult to compress the first spring so that the thermostatic valve assembly can be fitted in the housing.

According to a first aspect of the present invention, there is provided a kit for removing and replacing in a housing a thermostatic valve assembly for an internal combustion engine, which kit comprises:
a replacement thermostatic valve assembly comprising a valve closure member, mounting means for releasably holding said assembly in the housing, spring means acting along an axis between said closure member and said mounting means, the mounting means having at least two arms with abutment members for releasably engaging corresponding abutments of the housing by both axial and rotational movement relative to the axis of the spring means, and a temperature responsive unit connected to the valve closure member to move it to an open position in response to increase in temperature, said mounting means being freely movable against the spring means to release and engage said arms with said abutments of the housing; and
a tool for removing one thermostatic valve assembly from the housing and replacing a said replacement thermostatic valve assembly, said tool having a holding portion which in use is held by the user and engagement means arranged at an end region of the tool, said engagement means being arranged to engage said mounting means of a thermostatic valve assembly and permit axial and rotational movement of the tool and the mounting means relative to the assembly, against the bias of said spring means thereof, to locate the replacement assembly in said housing with the mounting means in engagement with said abutments.

As the replacement thermostatic valve assembly is arranged such that the mounting means is freely movable against the spring means to release and engage the arms with the abutments in the housing, it is a simple operation to insert the replacement thermostatic valve assembly into the existing housing. Accordingly, the existing housing, itself, does not need to be replaced. This considerably reduces the costs of replacing defective thermostatic valve assembly and may, for example, reduce the costs involved by up to 95%. The tool is advantageous in that it is able to engage the mounting means of the thermostatic valve assembly such that not only can the existing valve assembly be removed, but also the replacement thermostatic valve assembly can be inserted.

Preferably, the engagement means of the tool comprises a corresponding plurality of cut-out portions arranged to respectively receive said at least two arms. Thus, good engagement between the tool and the arms of the mounting means can be ensured so that the mounting means can be moved both into and out of abutment with said abutments in the housing.

The engagement means alternatively may comprise a serrated surface for engaging the mounted means. The serrated surface ensures that there is sufficient engagement between the tool and the mounting means of the thermostatic valve assembly such that the mounting means can be moved into and out of engagement with said abutments in the housing.

Alternatively, the engagement means may comprise a high friction surface which frictionally engages with mounting means. This is particularly advantageous in that it can be cheaply implemented. In particular, the material used to define the tool can itself also provide the high friction surface. Alternatively, the high friction surface can be defined by a coating of a suitable material. Generally, when the tool is used, the engagement means is urged against the mounting means, against the bias of the spring means. This additionally ensures that there is sufficient engagement between the high friction surface or serrated surface and the mounting means so that the arms can be released or engaged with the abutments.

The tool is preferably cylindrical which makes it easy to handle and simple to manufacture. The diameter of the lower end region of the tool may be selected to be smaller than an internal diameter of the housing and larger than a diameter of a portion of a thermostatic valve assembly which in use is received internally of the tool. Thus, the tool can be used with thermostatic valve assemblies which have portions on the opposite side of the mounting means to the valve closure member, without those portions interfering with the tool.

Preferably, the holding portion has a diameter which is greater than that of the said end region of the tool. The larger diameter holding portion makes it easier for the user to grip the tool. It should be appreciated that in alternative embodiments of the invention, the holding portion may have the same diameter or a smaller diameter than that of the end region of the tool. Alternatively, the holding portion may not be cylindrical with the end region being cylindrical.

The kit preferably comprises at least one O ring for replacing an existing O ring in the housing. In a preferred embodiment, a number of O rings are provided for use with various different housings with which the kit can be used. Preferably, at least one O ring is shaped so that it can adopt a required shape. In this way, the number of O rings which may be included in the kit can be reduced in that the O ring can be shaped to adopt a number of different shapes.

Preferably, the replacement thermostatic valve assembly has a bypass valve closure member arranged on the opposite side of the mounting means to the valve closure member and a second spring means arranged between the bypass valve closure member and the mounting means, whereby said first spring means is arranged only on one side of said mounting means and said second spring means is arranged only on the opposite side of said mounting means. Thus, the fouling which occurs with the existing thermostatic valve assemblies can be avoided.

According to a second aspect of the present invention according to claim 11, there is provided a method of removing one thermostatic valve assembiy from a housing and replacing a replacement thermostatic valve assembly in the housing, said replacement thermostatic valve assembly having a valve closure member, mounting means for releasably holding said assembly in the housing, spring means acting along an axis between said closure member and said mounting means, the mounting means having at least two arms with abutment members for releasably engaging corresponding abutments of the housing by both axial and rotational movement relative to the axis of the spring means, and a temperature responsive unit connected to the valve closure member to move it to an open position in response to increase in temperature, said mounting means being freely movable against the spring means to release and engage said arms with said abutments of the housing, said method comprising the steps of:
placing engagement means of a tool in contact with mounting means of one thermostatic valve assembly to be replaced:
applying a force to said tool to overcome a biasing force provided by the spring means in an axial direction and rotating the tool such that arms of the thermostatic valve assembly to be replaced are released from the abutments of the housing to thereby permit the one thermostatic valve assembly to be removed;
placing the replacement thermostatic valve assembly in the housing with the arms of the replacement thermostatic assembly out of alignment with the abutments of the housing;
placing the engagement means of the tool in contact with the arms of the replacement thermostatic valve assembly; and
applying a force to said tool in the axial direction against the biasing provided by the spring means and rotating the tool so that the arms are moved into a position in which the arms engage the abutments of the housing to thereby retain the replacement thermostatic valve assembly in position.

For a better understanding of the present invention and as to how the same may be carried into effect, reference will now be made by way of example to the accompanying drawings in which:
Figure 1 shows a thermostatic valve assembly;
Figure 2 shows the thermostatic valve assembly of Figure 1 when received in a schematically illustrated housing;
Figure 3 shows a perspective view of a first housing for receiving the thermostatic valve assembly of Figure 1;
Figure 4 shows a perspective view of a second housing for receiving the thermostatic valve assembly of Figure 1;
Figure 5 shows a first tool for removing and replacing the thermostatic valve assembly of Figure 1;
Figure 6 shows a second tool for removing and replacing the thermostatic valve assembly of Figure 1;
Figure 7 shows a third tool for removing and replacing the thermostatic valve assembly of Figure 1;
Figure 8 shows an O ring for use with the housing shown in Figure 3; and
Figure 9 shows an O ring for use with the housing shown in Figure 4.

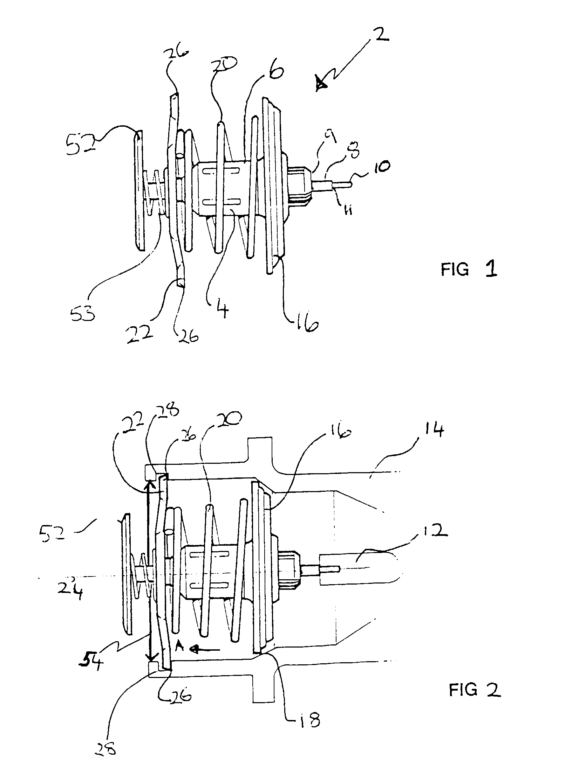

Reference will first be made to Figures 1 and 2 which show a thermostatic valve assembly 2. The thermostatic valve assembly 2 comprises a wax thermostat 4. The thermostat 4 has a copper cylinder 6 which is filled with wax or a wax/copper mixture. Also received in the copper cylinder 6 is a piston 8 which extends through one end 9 of the copper cylinder 6. The piston 8 is separated from the wax or wax/copper mixture by a rubber sleeve (not shown). The construction of the wax thermostat 4 shown in Figure 1 is generally known.

Attached to the end 11 of the piston 8 which is outside the copper cylinder 6, is a pin 10. As can be seen from Figure 2, this pin 10 is received in a seat 12 defined in a housing 14 in which the thermostatic valve assembly 2 is received. The housing 14 shown in Figure 2 is schematically illustrated.

The thermostatic valve assembly 2 also comprises a circular valve closure member 16 which when in the closed position, as illustrated in Figure 2, is received on a valve seat 18 of the housing 14. The valve closure member 16 is mounted on the copper cylinder 6 and is not movable relative thereto. The valve closure member 16 is urged into the position shown in Figure 2 by a spring 20. The spring 20 is arranged between the valve member 16 and an engagement member 22 which retains the thermostatic valve assembly 2 in position in the housing 14. The engagement member 22 is in the form of a relatively narrow bar which extends perpendicular to the longitudinal axis 24 of the thermostatic valve assembly 2. The two ends 26 of the engagement member 22 are received and retained respectively in two slots 28 on an interior wall 29 of the housing 14. The two slots 28 are diametrically opposed as are the two ends 26 of the engagement member 22. The slots 28 generally have a length which corresponds to the width of the bar defining the engagement member 22. The thickness of each end 26 of the engagement member 22 is selected so that the ends 26 can be received in the respective slots 28 with some play. The engagement member 22 can be considered to comprise two arms, with each arm cooperating with a respective slot 28. The spring 20 is such that when the thermostatic valve assembly 2 is received in the housing 14, as shown in Figure 2, the spring 20 urges the engagement member 22 and the valve closure member 16 in opposite directions.

The thermostatic valve assembly 2 also has a bypass valve closure member 52 and a second spring 53 arranged between the valve closure member 52 and the engagement member 22. The bypass valve member 52 is supported by a telescopically mounted shaft 51 which is supported by the copper cylinder 6. The bypass valve member 52 is thus able to move in the direction of the longitudinal axis 24 towards and away from the engagement member 22. The bypass valve member 52 is arranged on the opposite side of the engagement member 22 to the valve closure member 16. It should be appreciated that the first spring 20 is arranged on one side of the engagement member 22 and the second spring 53 is arranged on the second side of the engagement member 22. Even when the thermostatic valve assembly 2 is removed from the housing 14, the two springs 20 and 53 completely remain on different sides of the engagement member 22 so that there is no possibility of the two springs 20 and 53 becoming fouled.

The operation of the thermostatic valve assembly 2 illustrated in Figures 1 and 2 will now be explained. The thermostatic valve assembly 2 shown in Figures 1 and 2 is generally used in the engines of motor vehicles, for example in the cooling system. When the temperature of the engine is below, for example, 92°C, the valve closure member 16 is in the position shown in Figure 2 and the flow of cooling liquid prevented. However, when the temperature exceeds this value, the wax or wax/copper mixture in the copper cylinder 6 starts to melt and consequently expands. As a result of the expansion of the wax or wax/copper mixture, the wax or wax/copper mixture tries to urge the piston 8 out of the copper cylinder 6. However, as the pin 10 attached to the end of the piston 8 is received in an immovable seat 12, the expansion of the wax in the copper cylinder 6 instead forces the copper cylinder 6 and consequently the valve closing member 16 which is fixedly connected to the cylinder 6 to move in the direction of arrow A. It should be appreciated that the force provided by the expansion of the wax or wax/copper mixture in the copper cylinder 6 is sufficient to overcome the biasing force provided by the spring 20 against the valve member 16. As a result of the movement of the copper cylinder 6 and consequently the valve closure member 16, the valve closure member 16 is no longer in contact with valve seat 18 and accordingly the valve member 16 assumes the open position. Cooling liquid then circulates through the engine system. The valve closure member 16 may reach its fully open position once the temperature reaches for example 107°C. It should be appreciated that the temperatures given are merely by way of example and depending on the composition of the wax or wax/copper mixture, the valve can be arranged to open and close at other temperatures.

When the temperature falls below the melting point of the wax or wax/copper mixture, the wax or wax/copper mixture solidifies and contracts. The wax or wax/copper mixture no longer exerts a force against the piston 8. Accordingly, the biasing force provided by the spring 20 urges the valve member 16 back on to the valve seat 18. Consequently, the part of the piston 8 which was not received in the cylinder 6 when the wax or wax/copper mixture was in the molten state is received once more in the cylinder 6.

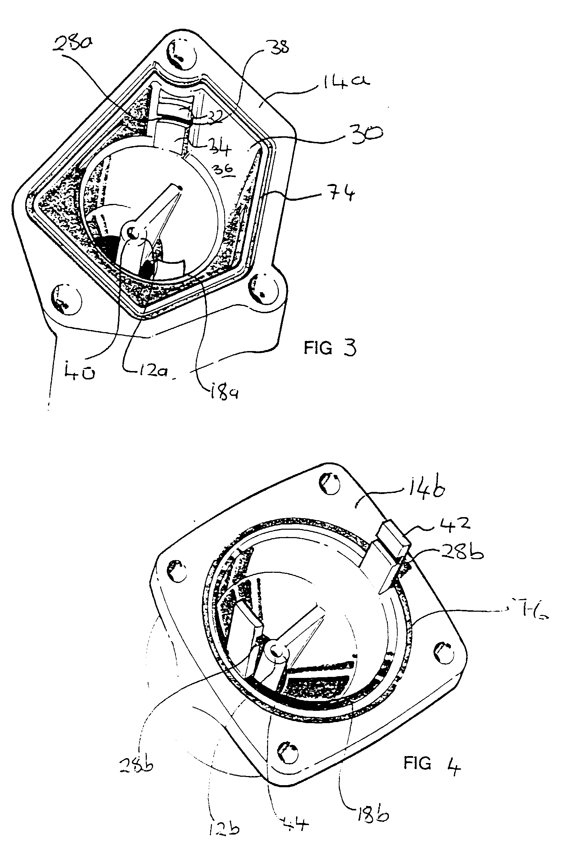

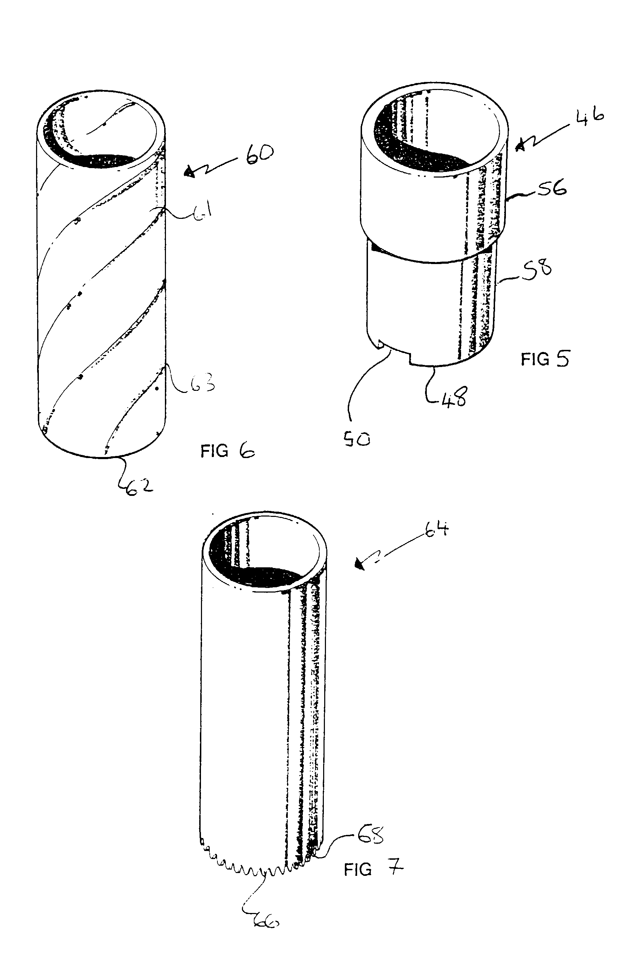

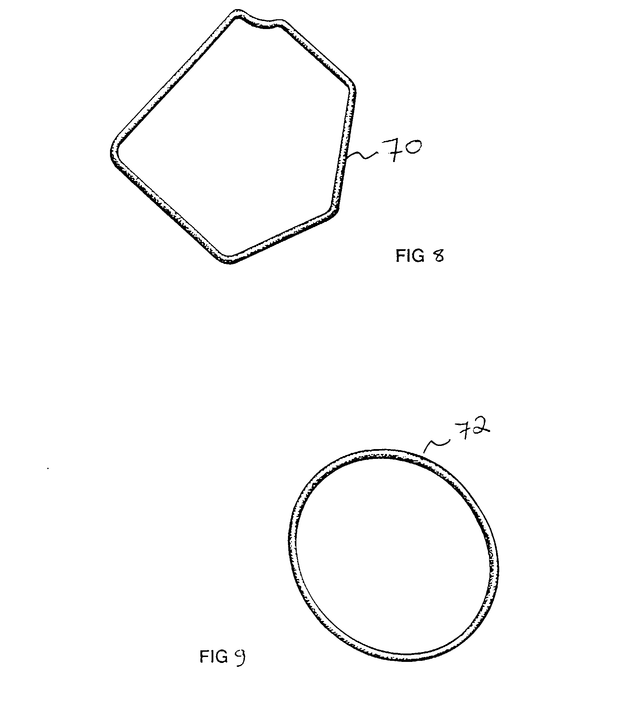

Reference will now be made to Figure 3 which shows a perspective view of a first housing 14a (without a thermostatic valve assembly in place). The same reference numerals are used in relation to this Figure as are used in relation to Figure 2 for like parts with the addition of the letter "a" after the relevant reference numeral. With this housing 14a, a recess 30 is provided in which the thermostatic valve assembly 2 is received. One of the slots 28a for receiving one end 26 of the engagement member 22 is shown. The slot 28a is defined on the wall 36 of the recess 30. In this embodiment, the slot 28a is defined by two protruding portions 32 and 34 which extend out of the plane of the wall 36 of the recess 30. The base 38 of the slot 28a is defined by the wall 36. A similar slot (not shown) is arranged opposite the illustrated slot 28a in Figure 3.

As shown in Figure 3, the pin 10 of the piston 8 is arranged to be received in a suitably sized hole 40 defined in the seat 12a. The valve member 16 of the thermostatic valve assembly 2 is arranged to be normally seated on the valve seat 18a.

Reference will now be made to Figure 4 which shows a second housing 14b. Those parts which are the same as shown in relation to Figure 2 are indicated by the same reference numeral followed by the letter "b". The two slots 28b for receiving the ends 26 of the engagement member 22 of the thermostatic valve assembly 2 are provided on respective post members 42. These posts 42 extend above the rest of the housing 14b. The seat for the pin 10 of the piston 8 is marked by reference numeral 12b. A suitably sized hole 44 is provided in the seat 12b to accommodate the pin 10. The valve seat 18b for receiving the valve member 16 when in the closed position is also indicated.

Reference will now be made to Figure 5 which shows a first tool 46 for removing and replacing a defective thermostatic valve assembly 2. The tool 46 is cylindrical in shape. The lower end 48 of the tool 46 is arranged to engage the ends 26 (or arms) of the engagement member 22 of the thermostatic valve assembly 2 to be replaced. In this regard, the lower end 48 of the tool 46 is provided with two key ways defined by respective cut-out portions 50, only one of which can be seen from Figure 5. The second cut-out portion which is not shown is the same as the first illustrated cut-out portion 50 and is arranged diametrically opposed thereto. The cut-out portions 50 are sized so as to be slightly larger than the width of the ends 26 of the engagement member such that in use the two ends 26 of the engagement member 22 are received in respective cut-out portions 50 of the tool 46.

The diameter of the lower part 48 of the tool 46 is selected so as to be larger than that of the bypass valve closure member 52 of the thermostatic valve assembly 2, but smaller than the internal diameter 54 of the housing 14, adjacent the slots 28. It should be appreciated that with a housing 40 of the type shown in Figure 4, the diameter of the lower part 48 of the tool 46 is less than the distance between the two posts 42. The upper part 56 of the tool 46 has a larger diameter as compared to the lower part 58 of the tool. This makes it easier for the user to grasp the tool 46. However, in some embodiments of the present invention, the diameter of the upper part 56 of the tool 26 may be the same as that of the lower part 58.

In order to remove a defective thermostatic valve assembly which will have a generally similar construction to that shown in Figure 1, the tool 46 is positioned over the bypass valve closure member 52 and arranged so that the cut-out portions 50 are engaged with the ends 26 of the engagement member 22, that is with the ends 26 of the engagement member 22 received in the cut-out portions 50 of the tool 46. The tool 46 is then rotated which also causes the engagement member 22 to rotate so that the ends 26 of the engagement member 22 are released from the slots 28. It should be appreciated that the first spring 20 will tend to resist the rotation of the engagement member 26 so that sufficient force to overcome this resistance should be applied to the tool 46. It may be necessary at the same time to apply a force on the tool 46 in the opposite direction to arrow A as the ends 26 of the engagement member 22 will generally be urged by the first spring 20 against the sides of the slots 28 further from the valve member 16. This force may be used to push the ends 26 of the engagement member 22 out of contact with the sides of the slots 28 or at least reduce the frictional contact between the slots 28 and the ends 26 of the engagement member 22. As mentioned hereinbefore, the ends 26 are received in the slots 28 with some play. Once the ends 26 of the engagement member 22 have been moved out of the slots 28, the tool 46 is removed. The thermostatic valve assembly 2 can then be removed from the housing as it is only retained in place as a result of the interaction between the ends 26 of the engagement member 22 and the slots 28.

In order to insert a new thermostatic valve assembly 2 such as shown in Figure 1, the thermostatic valve assembly 2 is placed by hand into the housing 14 with the pin 10 located in its seat 12. However, the engagement member 22 is arranged so that the ends 26 thereof are offset from the slots 28. The tool 46 is placed over the engagement member 22 such that the cut-out portions 50 engage the respective ends 26 of the engagement member 22. A force to overcome the biasing force provided by the first spring 20 is then applied by the user to the tool such that the ends 26 of the engagement member 22 are in the same plane as that defined by the slots 28. The tool 46 is then rotated until the ends 26 of the engagement member 22 are received in the respective slots 28 in the housing 14. Sufficient force must again be applied in order to overcome the resistance to rotation provided by the spring 20. Due to the construction of the thermostatic valve assembly shown in Figure 1, there is no risk that the first and second springs foul to prevent the compression of the first spring 20. Thus, using the tool 46, the thermostatic valve assembly 2 alone can be replaced, without having to also replace the housing 14.

The tool 46 shown in Figure 5 can be made of any suitable material such as a suitable metal or plastics material.

A second tool 60 is shown in Figure 6. Unlike the tool shown in Figure 5, the tool 60 does not have cut-out portions at its lower end 62. Rather, the lower end 62 of the tool 60 is provided with a relatively high friction surface. The tool shown in Figure 6 operates in a similar manner to the tool 46 shown in Figure 5. However, the high friction surface 62 is sufficient to engage the ends 26 of the engagement member, without the need to provide the cut-out portions. The requirement to exert a force on the tool 60 to overcome the biasing force provided by the first spring 20 both to remove a thermostatic valve assembly 2 and to insert a new thermostatic valve assembly 2 ensures that a sufficient degree of engagement is achieved resulting from the interaction of the ends 26 of the engagement member 22 and the high friction surface 62 so that the engagement member can be rotated by the tool 60 into and out of engagement with the slots 28. The tool 60 shown in Figure 6 can be made of any suitable material or combination of materials. The diameter of the upper portion 61 of the tool is the same as that of the lower portion 63. In one preferred embodiment, this tool is made of cardboard or plastics.

Figure 7 shows a third tool 64 which operates in exactly the same way as that shown in Figure 6. However, the lower end 66 of the tool is provided with a plurality of serrations 68. The serrations 68 are functionally equivalent to the high friction surface of the tool 60 shown in Figure 6. These serrations 68 are arranged to engage the ends 26 of the engagement member 22 when a force to overcome the biasing force provided by the spring is applied, without the need for the cut-out portions of the first tool 46. The tool shown in Figure 7 can be of any suitable material such as plastics, card or metal or any combination thereof.

The tools shown in Figures 5, 6 and 7 are all described as engaging the ends 26 of the engagement member 22. It should be noted that the term "end" is intended to include regions which are adjacent the ends.

As mentioned above, the original thermostatic valve assembly, which is to be replaced, generally has the same construction as the replacement thermostatic valve assembly 2. However, the original thermostatic valve assembly may have a slightly different construction concerning the positioning of the springs. In particular, with the original thermostatic valve assembly, whilst the two springs are on different sides of the engagement member when the thermostatic valve assembly is in the housing, this is not the case once the thermostatic valve assembly is removed from the housing. In particular, part of the second spring will be on the same side of the engagement member as the first spring. These two springs then tend to become tangled.

One embodiment of the present invention according to claim 1 comprises a kit for replacing a thermostatic valve assembly 2. The kit comprises a replacement thermostatic valve assembly 2 and a tool for removing and replacing the existing thermostatic valve assembly 2. The tool can be any one of the tools 46, 60 or 64 shown in relation to Figures 5, 6 and 7. It should be appreciated that the same kit can be used to replace thermostatic valves in a number of different types of housing. For example, a common kit could be used to replace the thermostatic valve assembly 2 when in place in either of the housings 14a or 14b shown in Figures 3 and 4. These two housings are shown purely by way of example and it should be appreciated that there are a number of other housing constructions which can receive a thermostatic valve assembly of the type described hereinbefore. The kit can be used to replace the thermostatic valve assembly of any of these housings.

The kit may additionally include one or more O rings. In a particularly preferred embodiment, the kit includes O rings suitable for use with all the various different types of housing in which a given type of thermostatic valve assembly 2 can be fitted. For example, the kit may include both of the O rings 70 and 72 shown in Figures 8 and 9. In particular, the O ring shown in Figure 8 can be used with the housing shown in Figure 3 and is received in an O ring accommodating groove 74 (see Figure 3). The O ring 72 shown in Figure 9 can be used with the housing shown in Figure 4 and is received in the O ring accommodating groove 76 (see Figure 4). It should be appreciated that any other suitable shape of O ring may additionally or alternatively included in the kit. In one embodiment of the present invention, a flexible O ring is provided which can be received in any shape of O ring groove. For example, instead of the O ring shown in Figure 8, a flexible circular or oval O ring could be provided which might be shaped to be accommodated in groove 74.

The tools shown in Figures 5 to 7 may be modified so as to include handle elements which are grasped by the user. It should also be appreciated that the number of cut-out portions provided on the tool shown in Figure 5 can of course be modified in dependence on the shape of the engagement member. For example, if the engagement member is provided with three equally spaced arms, then the tool shown in Figure 5 would be provided with three cut-out portions at equally spaced locations around the bottom of the tool. If the engagement member of the thermostatic valve assembly has more than three arms, then the bottom of the tool can be provided with a corresponding number of cut-out portions. It should also be appreciated, that depending on the construction of the tool, the tool can be arranged to contact any suitable portions of the engagement member, other than the ends thereof.

## Claims

1. A kit for removing and replacing in a housing (14) a thermostatic valve (2) assembly for an internal combustion engine, which kit comprises:
a replacement thermostatic valve assembly (2) comprising a valve closure member (16), mounting means (22) for releasably holding said assembly in the housing, spring means (20) acting along an axis (24) between said closure member (16) and said mounting means (22), the mounting means (22) having at least two arms with abutment members (26) for releasably engaging corresponding abutments (28) of the housing by both axial and rotational movement relative to the axis of the spring means (20), and a temperature responsive unit (4) connected to the valve closure member (16) to move it in response to increase in temperature, said mounting means (22) being freely movable against the spring means (20) to release and engage said arms with said abutments (26) of the housing (14) and
a tool (46) for removing one thermostatic valve assembly (2) from the housing (14) and replacing a said replacement thermostatic valve assembly (2), said tool (46) having a holding portion (56) which in use is held by the user and engagement means (50) arranged at an end region of the tool (46), said engagement means (50) being arranged to engage said mounting means (22) of a thermostatic valve assembly (2) and permit axial and rotational movement of the tool (46) and the mounting means (22) relative to the assembly (2), against the bias of said spring means (20) thereof, to locate the replacement assembly in said housing (14) with the mounting means (22) in engagement with said abutments (26).

2. A kit as claimed in claim 1, wherein said engagement means (50) comprises a corresponding plurality of cut-out portions (50) arranged to respectively receive said at least two arms.

3. A kit as claimed in claim 1, wherein said engagement means (46) comprises a serrated surface (60) for engaging said mounting means (22).

4. A kit as claimed in claim 1, wherein said engagement means (46) comprises a high friction surface (62) which frictionally engages with mounting means (22).

5. A kit as claimed in any preceding claim, wherein said tool (46) is substantially cylindrical.

6. A kit as claimed in claim 5 wherein the diameter of the lower end region of the tool (58) is selected to be smaller than an internal diameter (54) of the housing (14), and larger than a diameter of a portion (52) of the thermostatic valve assembly (2) which in use is received internally of said tool.

7. A kit as claimed in claim 5 or 6, wherein the diameter of the holding portion (56) of the tool (46) is greater than that of said end region of the tool (46).

8. A kit as claimed in any preceding claim further comprising at least one O ring (70) for replacing an existing O ring in said housing.

9. A kit as claimed in claim 8, wherein at least one O ring (32) is shaped so that it can adopt a required shape.

10. A kit as claimed in any Preceding claim, wherein the replacement thermostatic valve assembly (2) has a bypass valve closure member (52) arranged on the opposite side of the mounting means (22) to the valve closure member (16) and a second spring means (53) arranged between the bypass valve closure member (52) and the mounting means (22), whereby said first spring means (26) is arranged only on one side of said mounting means (22) and said second spring means (53) is arranged only on the second side of the mounting means (22).

11. A method of removing one thermostatic valve assembly (2) from a housing (14) and replacing a replacement thermostatic valve assembly (2) in the housing (14), replacement thermostatic valve assembly (2) having a valve closure member (16), mounting means (22) for releasably holding said assembly in the housing (14), spring means (20) acting along an axis (24) between said closure member (16) and said mounting means (22), the mounting means(22) having at least two arms with abutment members (26) for releasably engaging corresponding abutments (28) of the housing (14) by both axial and rotational movement relative to the axis (24) of the spring means (20), and a temperature responsive unit (4) connected to the valve closure member (16) to move it to an open position in response to increase in temperature, said mounting means (22) being freely movable against the spring means (20) to release and engage said arms with said abutments (28) of the housing (14), said method comprising the steps of:
placing engagement means (50) of a tool in contact with mounting means of one thermostatic valve assembly (2) to be replaced:
applying a force to said tool (46) to overcome a biasing force provided by the spring means (20) in an axial direction and rotating the tool (46) such that arms of the thermostatic valve assembly (2) to be replaced are released from the abutments (28) of the housing (14) to thereby permit the one thermostatic valve assembly (2) to be removed;
placing the replacement thermostatic valve assembly (2) in the housing with the arms of the replacement thermostatic assembly (2) out of alignment with the abutments (28) of the housing (14);
placing the engagement means (50) of the tool (46) in contact with the arms of the replacement thermostatic valve assembly (2); and
applying a force to said tool (46) in the axial direction against the biasing provided by the spring means (20) and rotating the tool (46) so that the arms are moved into a position in which the arms engage the abutments (28) of the housing (14) to thereby retain the replacement thermostatic valve assembly (2) in position.

## Patentansprüche

1. Bausatz zum Entfernen und Ersetzen einer thermostatischen Ventilvorrichtung (2) für eine Brennkraftmaschine in einem Gehäuse, wobei der Bausatz aufweist:
eine Ersatz-Thermostatventilvorrichtung (2) mit einem Ventilschließbauteil (16), einer Befestigungseinrichtung (22) zum lösbaren Halten der Vorrichtung im Gehäuse, eine Federeinrichtung (20), die entlang einer Achse zwischen dem Schließbauteil (16) und der Befestigungseinrichtung (22) wirkt, wobei die Befestigungseinrichtung (22) mindestens zwei Arme mit Stoßbauteilen (26) aufweist, um entsprechende Stoßbauteile (28) des Gehäuses lösbar in Eingriff zu nehmen, durch sowohl axiale als auch drehende Bewegung relativ zur Achse der Federeinrichtung (20), und eine temperaturreaktive Einheit (4), die mit dem Ventilschließbauteil (16) verbunden ist, um es in Reaktion auf eine Temperaturerhöhung zu bewegen, wobei die Befestigungseinrichtung (22) frei gegen die Federeinrichtung (20) beweglich ist, um die Arme aus dem Stoß (26) mit dem Gehäuse (14) freizugeben und sie mit diesem in Eingriff zu bringen; und
ein Werkzeug (46) zur Entfernung einer Thermostatventilvorrichtung (2) von dem Gehäuse (14) und zum Ersetzen durch die Ersatz-Thermostatventilvorrichtung (2), wobei das Werkzeug (46) einen Halteabschnitt (56) aufweist, der bei der Verwendung von dem Benutzer gehalten wird, und eine Eingriffseinrichtung (50), die an einem Endbereich des Werkzeugs (46) angeordnet ist, wobei die Eingriffseinrichtung (50) so angeordnet ist, dass sie die Befestigungseinrichtung (22) einer Thermostatventilvorrichtung (2) in Eingriff nimmt und eine axiale und eine drehende Bewegung des Werkzeuges (46) und der Befestigungseinrichtung (22) gegenüber der Vorrichtung (2) gestattet, und zwar gegen die Vorspannung ihrer Federeinrichtung (20), um die Ersatzvorrichtung in dem Gehäuse (14) anzuordnen, wobei die Befestigungseinrichtung (22) mit den Stößen (26) in Eingriff ist.

2. Bausatz nach Anspruch 1, bei dem die Eingriffseinrichtung (50) eine entsprechende Vielzahl an ausgeschnittenen Abschnitten (50) aufweist, die angeordnet sind, um jeweils die mindestens zwei Arme aufzunehmen.

3. Bausatz nach Anspruch 1, bei dem die Eingriffseinrichtung (46) eine gezahnte Oberfläche (60) für den Eingriff mit der Befestigungseinrichtung (22) aufweist.

4. Bausatz nach Anspruch 1, bei dem die Eingriffseinrichtung (46) eine Oberfläche (62) mit hoher Reibung aufweist, welche mit der Befestigungseinrichtung (22) in Reibungseingriff tritt.

5. Bausatz nach einem der vorhergehenden Ansprüche, bei dem das Werkzeug (46) im wesentlichen zylindrisch ist.

6. Bausatz nach Anspruch 5, bei dem der Durchmesser des unteren Endbereichs des Werkzeugs (58) so gewählt wird, dass er kleiner ist als ein Innendurchmesser (54) des Gehäuses (14), sowie größer als ein Durchmesser eines Abschnitts (52) der Thermostatventilvorrichtung (2), welche bei der Verwendung innen in dem Werkzeug aufgenommen wird.

7. Bausatz nach Anspruch 5 oder 6, bei dem der Durchmesser des Halteabschnitts (56) des Werkzeugs (46) größer ist als derjenige des Endbereiches des Werkzeugs (46).

8. Bausatz nach einem der vorhergehenden Ansprüche, der ferner mindestens einen O-Ring (70) zum Ersetzen eines vorhandenen O-Ringes in dem Gehäuse umfasst.

9. Bausatz nach Anspruch 8, bei dem der mindestens eine O-Ring (32) so geformt ist, dass er eine benötigte Form annehmen kann.

10. Bausatz nach einem der vorhergehenden Ansprüche, bei dem die Ersatz-Thermostatventilvorrichtung (2) ein Bypass-Ventilschließbauteil (52) aufweist, das an der dem Ventilschließbauteil (16) gegenüberliegenden Seite der Befestigungseinrichtung (22) angeordnet ist, und eine zweite Federeinrichtung (53), die zwischen dem Bypass-Ventilschließbauteil (52) und der Befestigungseinrichtung (22) angeordnet ist, wodurch die erste Federeinrichtung (26) nur auf einer Seite der Befestigungseinrichtung (22) angeordnet ist und die zweite Federeinrichtung (53) nur auf der zweiten Seite der Befestigungseinrichtung (22) angeordnet ist.

11. Verfahren zum Entfernen einer thermostatischen Ventilvorrichtung (2) aus einem Gehäuse (14) und zum Ersetzen durch eine Ersatz-Thermostatventilvorrichtung (2) in dem Gehäuse (14), wobei die Ersatz-Thermostatventilvorrichtung (2) ein Ventilschließbauteil (16) aufweist, eine Befestigungseinrichtung (22) zum lösbaren Halten der Vorrichtung in dem Gehäuse (14), eine Federeinrichtung (20), die entlang einer Achse (24) zwischen dem Schließbauteil (16) und der Befestigungseinrichtung (22) wirkt, wobei die Befestigungseinrichtung (22) mindestens zwei Arme mit Stoßbauteilen (26) hat, um entsprechende Stöße (28) des Gehäuses (14) durch sowohl axiale als auch drehende Bewegung gegenüber der Achse (24) der Federeinrichtung (20) lösbar in Eingriff zu nehmen, und eine temperaturreaktive Einheit (4), die mit dem Ventilschließbauteil (16) verbunden ist, um es in Reaktion auf einen Temperaturanstieg in eine offene Position zu bewegen, wobei die Befestigungseinrichtung (22) frei gegen die Federeinrichtung (2) beweglich ist, um die Arme von den Stößen (28) des Gehäuses (14) zu lösen und sie damit in Eingriff zu bringen, wobei das Verfahren die folgenden Schritte aufweist:
die Eingriffseinrichtung (50) eines Werkzeugs wird mit der Befestigungseinrichtung einer Thermostatventilvorrichtung (2), die ersetzt werden soll, in Eingriff gebracht;
eine Kraft wird auf das Werkzeug (46) aufgebracht, um eine Vorspannkraft zu überwinden, die durch das Federbauteil (20) in axialer Richtung bereitgestellt wird; und das Werkzeug (46) wird gedreht, so dass die Arme der thermostatischen Ventilvorrichtung (2), die ersetzt werden soll. von den Anstößen (28) des Gehäuses (14) gelöst werden, um es dadurch zu gestatten, dass die eine Thermostatventilvorrichtung (2) entfernt werden kann;
die Ersatz-Thermostatventilvorrichtung (2) wird in das Gehäuse eingesetzt, wobei die Arme der Ersatz-Thermostatventilvorrichtung (2) nicht mit den Stößen (28) des Gehäuses (14) ausgerichtet sind;
die Eingriffseinrichtung (50) des Werkzeugs (46) wird mit den Armen der Ersatz-Thermostatventilvorrichtung (2) in Eingriff gebracht; und
eine Kraft wird auf das Werkzeug (46) in Axialrichtung gegen die von der Federeinrichtung (20) bereitgestellte Vorspannung aufgebracht, und das Werkzeug (46) wird so gedreht, dass die Arme in eine Position bewegt werden, in welcher die Arme mit den Stößen (28) des Gehäuses (14) in Eingriff kommen, um dadurch die Ersatz-Thermostatventilvorrichtung (2) in Position zu halten.

## Revendications

1. Kit pour démonter et remplacer dans un boîtier (14) un ensemble à soupape thermostatique (2) pour un moteur à combustion interne, lequel kit comporte :
un ensemble à soupape thermostatique (2) de remplacement comportant un élément de fermeture de soupape (16), un moyen de montage (22) destiné à maintenir de façon libérable ledit ensemble dans le boîtier, un moyen à ressort (20) agissant le long d'un axe (24) entre ledit élément de fermeture (16) et ledit moyen de montage (22), le moyen de montage (22) ayant au moins deux bras avec des éléments d'appui (26) destinés à engager de façon libérable des appuis correspondants (28) du boîtier par un mouvement à la fois axial et de rotation par rapport à l'axe du moyen à ressort (20), et une unité (4) sensible à la température reliée à l'élément de fermeture (16) de la soupape pour le déplacer en réponse à une élévation de la température, ledit moyen de montage (22) pouvant être déplacé librement contre le moyen à ressort (20) pour libérer et engager lesdits bras avec lesdits appuis (26) du boîtier (14) ; et
un outil (46) pour démonter un ensemble à soupape thermostatique (2) du boîtier (14) et remettre en place un ensemble à soupape thermostatique (2) de remplacement, ledit outil (46) ayant une partie de maintien (56) qui, lors de l'utilisation, est maintenue par l'utilisateur et un moyen d'engagement (50) agencé à une région extrême de l'outil (46), ledit moyen d'engagement (50) étant agencé de façon à engager ledit moyen de montage (22) d'un ensemble à soupape thermostatique (20) et à permettre un mouvement axial et de rotation de l'outil (46) et du moyen de montage (22) par rapport à l'ensemble (2), contre la force de rappel dudit moyen à ressort (20) de celui-ci, afin de placer l'ensemble de remplacement dans ledit boîtier (14) avec le moyen de montage (22) en engagement avec lesdits appuis (26).

2. Kit selon la revendication 1, dans lequel ledit moyen d'engagement (50) comporte une pluralité correspondante de parties découpées (50) agencées de façon à recevoir respectivement lesdits, au moins deux, bras.

3. Kit selon la revendication 1, dans lequel ledit moyen d'engagement (46) présente une surface dentelée (60) destinée à engager ledit moyen de montage (22).

4. Kit selon la revendication 1, dans lequel ledit moyen d'engagement (46) présente une surface à frottement élevé (62) qui établit une prise de frottement avec le moyen de montage (22).

5. Kit selon l'une quelconque des revendications précédentes, dans lequel ledit outil (46) est sensiblement cylindrique.

6. Kit selon la revendication 5, dans lequel le diamètre de la région extrême inférieur de l'outil (58) est choisi de façon à être inférieur à un diamètre intérieur (54) du boîtier (14), et supérieur à un diamètre d'une partie (52) de l'ensemble à soupape thermostatique (2) qui, lors de l'utilisation, est reçue à l'intérieur dudit outil.

7. Kit selon la revendication 5 ou 6, dans lequel le diamètre de la partie de maintien (56) de l'outil (46) est supérieur à celui de ladite région extrême de l'outil (46).

8. Kit selon l'une quelconque des revendications précédentes, comportant en outre au moins une bague torique (70) pour remplacer une bague torique existante dans ledit boîtier.

9. Kit selon la revendication 8, dans lequel au moins une bague torique (32) est configurée de façon à pouvoir adopter une forme demandée.

10. Kit selon l'une quelconque des revendications précédentes, dans lequel l'ensemble à soupape thermostatique (2) de remplacement comporte un élément de fermeture de soupape de dérivation (52) agencé sur le côté opposé du moyen de montage (22) par rapport à l'élément de fermeture de soupape (16) et un second moyen à ressort (53) agencé entre l'élément de fermeture de soupape de dérivation (52) et le moyen de montage (22), grâce à quoi ledit premier moyen à ressort (26) est agencé uniquement sur un côté dudit moyen de montage (22) et ledit second moyen à ressort (53) est agencé uniquement sur le second côté du moyen de montage (22).

11. Procédé de démontage d'un ensemble à soupape thermostatique (2) d'un boîtier (14) et de remontage d'un ensemble à soupape thermostatique de remplacement (2) dans le boîtier (14), ledit ensemble à soupape thermostatique de remplacement (2) ayant un élément de fermeture de soupape (16), un moyen de montage (22) destiné à maintenir de façon libérable ledit ensemble dans le boîtier (14), un moyen à ressort (20) agissant le long d'un axe (24) entre ledit élément de fermeture (16) et ledit moyen de montage (22), le moyen de montage (22) ayant au moins deux bras avec des éléments d'appui (26) destinés à engager de façon libérable des appuis correspondants (28) du boîtier (14) par un mouvement à la fois axial et de rotation par rapport à l'axe (24) du moyen à ressort (20), et une unité (4) sensible à la température reliée à l'élément de fermeture de soupape (16) pour le déplacer vers une position ouverte en réponse à une élévation de la température, ledit moyen de montage (22) pouvant être déplacé librement contre le moyen à ressort (20) afin de libérer et d'engager lesdits bras avec lesdits appuis (28) du boîtier (14), ledit procédé comprenant les étapes dans lesquelles :
on place un moyen d'engagement (50) d'un outil en contact avec le moyen de montage d'un ensemble à soupape thermostatique (2) devant être remplacé ;
on applique une force audit outil (46) pour vaincre une force de rappel produite par le moyen à ressort (20) dans une direction axiale et on fait tourner l'outil (46) de façon que les bras de l'ensemble à soupape thermostatique (2) devant être remplacé soient libérés des appuis (28) du boîtier (14) pour permettre ainsi à cet ensemble à soupape thermostatique (2) d'être démonté ;
on met en place l'ensemble à soupape thermostatique de remplacement (2) dans le boîtier avec les bras de l'ensemble thermostatique de remplacement (2) non alignés avec les appuis (28) du boîtier (14) ;
on met en place le moyen d'engagement (50) de l'outil (46) en contact avec les bras de l'ensemble à soupape thermostatique de remplacement (2) ; et
on applique une force audit outil (46) dans la direction axiale contre la force de rappel produite par le moyen à ressort (20) et on fait tourner l'outil (46) afin que les bras soient amenés dans une position dans laquelle les bras engagent les appuis (28) du boîtier (14) pour retenir ainsi en position l'ensemble à soupape thermostatique de remplacement (2).
